# EUROPEAN PATENT APPLICATION

(11) **EP 1 900 704 A2**
(43) Date of publication of application: **19.03.2008**
(21) Application number: 07018135.9
(22) Date of filing: 14.09.2007
(51) Int. Cl.: C04B 28/02, C04B 38/08, C04B 38/10, C09K 8/473, C04B 14/08, C04B 14/04, C04B 103/12

(54) **Low density cements for use in cementing operations**

(30) Priority: 14.09.2006 US 844459 P
(71) Applicant: BJ SERVICES COMPANY, Houston TX 77041 (US)
(72) Inventor: Fraser, Michael R., Calgary, Alberta T1Y2J4 (CA)
(74) Representative: Stenger, Watzke & Ring

(57) **Abstract**

A cement mix suitable for blocking or plugging an abandoned pipeline or back filling a mine shaft, tunnel or excavations contains (i) Portland cement or a mixture of at least two components selected from Portland cement, fly ash, slag, silica fume, gypsum, bentonite and limestone; (ii) diatomaceous earth; (iii) zeolite, (iv) an aluminum silicate and (v) an inorganic salt accelerator. The cement mix may further contain an alkali metasilicate and/or alkali silicate. A cementitious slurry, formulated from the cement mix, may have a density less than or equal to 1500 kg/m³, and exhibits good compressive strength.

## Description

### Field of the Invention

This invention relates to cement mixes and low density cementitious slurries prepared therefrom which are useful in the blocking, plugging or back filling of conduits such as pipelines, mine shafts, tunnels and excavations, including hydrocarbon recovery conduits as well as conduits used in the recovery of minerals, copper, potash, coal, copper, potassium chloride, etc. The cement mixes and slurries are further useful in cementing operations within subterranean formations of a well.

### Background of the Invention

Various techniques have been developed for blocking, plugging and filling of conduits used in the recovery of materials such as hydrocarbons, potash, coal, copper, potassium chloride, minerals, etc. Such techniques become necessary when mine shafts, tunnels or excavations, as well as pipelines used in the transportation of produced fluids, are abandoned, flooded, clogged or otherwise no longer useful.

In one such technique, the conduit is sealed or backfilled by the use of a foamed cement grout. Often, however, the grout, once mixed, becomes overly viscous, and tends to compress and cause friction and back-pressure when pumped through the conduit. Such difficulties are often even more pronounced as it becomes necessary to move the grout over great distances, as from the surface to an injection point far inside a tunnel. Another problem encountered with conventional grouting systems during the filling of conduits stems from the inability of the grout to be delivered continuously at a high volume rate over sustained periods.

Alternative cement based compositions have therefore been sought. Cementitious compositions which exhibit low density have in particular been sought since they would be more economical than cement compositions of the prior art. To be useful as alternative cement compositions however, it is essential that such lightweight low density cements exhibit enhanced compressive, tensile and bond strengths upon setting.

### Summary of the Invention

The cement mix of the invention, when formulated into a hydraulically-active, cementitious slurry, is suitable for use in such cementing operations as the blocking, plugging or back filling of conduits, including conduits used in hydrocarbon recovery (such as abandoned pipelines) as well as conduits used in the recovery of such materials as copper, potassium chloride, potash, coal, minerals, etc. Such cementitious slurries exhibit the requisite compressive, tensile and bond strengths for such purposes.

Cementitious slurries from the cement mix may further be used to cement within a subterranean formation for wells by pumping the cementitious slurry into the subterranean formation and then allowing the cementitious slurry to set.

The cement mix comprises a cementitious material, diatomaceous earth, zeolite; an inorganic salt accelerator. The cement mix further preferably contains an alkali metasilicate and/or alkali silicate.

In addition, the cement mix may contain a lightweight density modifying agent, such as ceramic spheres, glass spheres, plastic spheres, perlite, gilsonite and coal. The cement mix may further contain a foaming agent and a gas such as nitrogen gas or air.

The cementitious material may be Portland cement or a mixture of two or more components selected from Portland cement, fly ash, slag, silica fume, gypsum, bentonite and limestone.

Preferred aluminum silicates include kaolin, calcined kaolin and kaolinite.

The inorganic salt accelerator is preferably an alkali sulfate, alkali aluminate, alkali carbonate or alkali chloride. Suitable inorganic salts for use as the accelerator include sodium sulfate, potassium sulfate, lithium sulfate, lithium chloride, sodium carbonate, sodium aluminate, potassium chloride, sodium chloride and calcium chloride. In one preferred embodiment, the accelerator is sodium sulfate.

A cementitious slurry, formulated from the cement mix, may have a density less than or equal to 1500 kg/m³, preferably less than or equal to 1300 kg/m³.

The slurry may contain fresh water, salt water, formation brine or synthetic brine or a mixture thereof.

### Detailed Description of the Preferred Embodiments

The cement mix of the invention, when formulated into a hydraulically-active, cementitious slurry, is suitable for blocking, plugging or back filling conduits. Such conduits include pipelines, mine shafts, tunnels and excavations and are exemplified by hydrocarbon recovery conduits as well as conduits used in the recovery of potash, coal, copper, potassium chloride, minerals, etc.

In addition to a cementitious material, such as Portland cement, the cement mix further contains diatomaceous earth, zeolite, an inorganic salt accelerator as well as an aluminum silicate. Further, the cement mix preferably contains an alkali metasilicate and/or alkali silicate.

The cementitious material may be Portland cement. Alternatively, the cementitious material may be a mixture of two or more components selected from Portland cement, fly ash, slag, silica fume, gypsum, limestone and bentonite.

Typically, between from about 10 to about 70, preferably between from about 20 to about 65, most preferably from about 35 to about 65, weight percent of the cement mix is Portland cement or the referenced mixture.

Any of the oil well type cements of the class "A-H" as listed in the API Spec 10A, (22nd ed., January 1995 or alternatively ISO 10426-1), are suitable. Especially preferred is Portland cement, preferably an API Class A, C, G or H cement. Alternatively, the Portland cement may be a Type I, II, III or V ASTM construction cement. Type II is especially desirable where moderate heat of hydration is required. Type III or high early cement is typically preferred when early compressive strength is needed. Type V is preferred when high sulfate resistance is required.

In a preferred embodiment, the cement is a high early cement since such cements typically set faster than conventional Portland cement.

When used, the slag has hydraulic properties and, preferably, is ground-granulated blast furnace slag with a minimum glass count of about 95% and a fine particle size of about 1 to about 100 µ, preferably less than about 45 µ, most preferably less than 10 µ or a fineness of about 310 to about 540 m²/kg. When blended with Portland cement, the cement blend may contain between from about 90 weight percent cement and 10 weight percent slag to 10 weight percent cement and 90 weight percent slag with all percentages based on dry weight.

The cement of the cement mix is that which is sufficient to impart to a cementitious slurry (of density less than or equal to 1500 kg/m³) a compressive strength of 3.5 MPa in 48 hours. Preferably, the amount of zeolite in the cement mix is between from about 4 to about 20 weight percent. More preferably, the amount of zeolite in the cement mix is between from about 10 to about 15 weight percent.

The diatomaceous earth may be any technical grade such as Kiselguhr, guhr, diatomite, tripolite, tellurine, tetta silicea, ceyssatite or fossil flour. Typically, between from about 10 to about 60, preferably from about 15 to about 50, more preferably from about 25 to about 45, weight percent of the cement mix is diatomaceous earth.

The aluminum silicate is typically comprised of SiO₂/Al₂O₃/Fe₂O₃. Most typically the aluminum silicate is kaolin, calcined kaolin or kaolinite (metakaolin) or mixtures thereof. Such aluminum silicate may also be referred to as China Clay. Other suitable forms of aluminum silicate include, but are not limited to, halloysite, dickite, and nacrite, and mixtures thereof, as well as mixtures of these with materials with kaolin and/or metakaolin. The amount of aluminum silicate in the cement mix is typically between from about 5 to about 70 weight percent, preferably from about 8 to about 45 weight percent.

The alkali metasilicate and/or alkali silicate may serve as an accelerator and/or suspending agent. In addition, it assists in the lowering of the density of the cementitious slurry and thereby permits a greater amount of water to be used in the slurry.

The alkali metasilicate and/or alkali silicate is preferably sodium metasilicate or sodium silicate. When present the cement mix typically contains between from about 0.5 to about 5 weight percent of alkali metasilicate and/or alkali silicate. A preferred sodium metasilicate for use in this invention is commercially available from BJ Services Company as A-2, SMS or EXC.

The amount of inorganic salt accelerator in the cement mix is typically between from about 0.1 to about 20 weight percent.

Preferred for use as the inorganic salt accelerator are alkali sulfates, alkali aluminates, alkali carbonates and alkali metal halides such as the chlorides. Suitable inorganic salt accelerators include sodium sulfate, potassium sulfate, lithium sulfate, lithium chloride, sodium carbonate, sodium aluminate, potassium chloride, sodium chloride and calcium chloride. In one preferred embodiment, the accelerator is sodium sulfate.

In a preferred embodiment, the inorganic salt accelerator consists of sodium aluminate, sodium carbonate and sodium sulfate wherein between from about 0 to about 1 weight percent of the cement mix is sodium aluminate, between from about 0 to about 2 weight percent of the cement mix is sodium carbonate and between from about 0 to about 10 weight percent of the cement mix is sodium sulfate.

In another preferred embodiment, the accelerator consists of sodium carbonate and sodium sulfate wherein between from about 0 to about 2 weight percent of the cement mix is sodium carbonate and between from about 0 to about 10 weight percent of the cement mix is sodium sulfate.

In yet another preferred embodiment, the accelerator is sodium sulfate wherein between from about 0 to about 15, more preferably between from about 0.5 to about 10, weight percent of the cement mix is sodium sulfate.

The cement mix may also contain a lightweight density modifying agent. Suitable lightweight density modifying agents (which, like the diatomaceous earth, may decrease the density of the cementitious slurry) include glass or ceramic microspheres, such as hollow ceramic spheres, hollow glass spheres, plastic spheres, perlite, gilsonite and coal. The cementitious slurry may further contain a foaming agent and a gas such as nitrogen gas or air.

The amount of lightweight density modifying agent present in the cement mix is an amount sufficient to lower the density of the cementitious slurry to the desired range. When present, the amount of lightweight density modifying agent in the cement mix is typically between from about 1 to about 50 weight percent of cement mix.

Preferably, the microspheres exhibit a density of between from about 0.2 to about 0.9, most preferably about 0.35 to 0.4, g/cc and an isotatic crush resistance of from about 1000 to about 20,000 psi. More preferably the spheres are made out of borosilicate glass. Most preferred microspheres are commercially available from 3M and are sold under the name Scotchlite™ Glass Bubbles HGS Series. They are manufactured with tolerances for a specific pressure. For instance, the HGS-5000 is rated to a 37.9 MPa (5500 psi) crush strength and HGS-10000 to 67 MPa (10000 psi).

In a preferred embodiment of the invention, the cement mix contains Portland cement or a cement mix, glass, ceramic or plastic microspheres, sodium metasilicate (as a suspension agent for the microspheres), zeolite, diatomaceous earth, and potassium chloride (as inorganic salt accelerator). Cementitious slurries formulated from such cement mixes are particularly efficacious at higher downhole temperatures. For instance, such cement mixes are particularly useful at downhole temperatures of 50° C or higher. Further, such cement mixes may provide assistance in the prevention of gas migration through a column of cement.

A cementitious slurry, formulated from the cement mix, may exhibit a density less than or equal to 1500 kg/m³, preferably less than or equal to 1300 kg/m³. The slurry may contain fresh water, salt water, formation brine or synthetic brine or a mixture thereof.

The cement mix may further contain, for fluid loss control, one or more fluid loss additives. Suitable fluid loss control additives include polyvinyl alcohol, optionally with boric acid, hydroxyethyl cellulose, carboxymethyl hydroxyethyl cellulose, synthetic anionic polymers and synthetic cationic polymers. Such fluid loss control additives, when present, are typically a component of the cement mix, though it could be introduced into the cementitious slurry. When present, the amount of fluid loss control additive is between from about 0.1 to about 2 weight percent.

A plasticizing agent may further be used in the cement mix (or added directly to the slurry) to assist in control of the fluidity of the slurry. Specific examples of plasticizing agents include melamine sulfonic acid polymer condensation product, sodium polyacrylate, naphthalene sulfonic acid, sodium salt of naphthalene sulfonate formaldehyde condensate, sodium sulfonated melamine formaldehyde (SMF) and sulfonated-styrene maleic anhydride polymer. When present, the amount of plasticizer in is between from about 0.1 to about 2 weight percent of the cement mix.

The cementitious slurry may be used to block or plug an abandoned pipeline or back filling mine shafts and excavations by being pumped into the abandoned pipeline, mine shafts or excavation and allowing it to set. The slurry may further be used to cement a subterranean formation for wells by pumping the cementitious slurry into the subterranean formation and then allowing the cementitious slurry to set. Suitable wells for use of the cementitious slurry include oil wells, gas wells, water wells, injection wells, disposal wells and storage wells.

The cement mix may further contain a set retarder in order to provide adequate placement time of the cementitious slurry in deeper and hotter wells. Alternatively, the set retarder could be introduced directly into the cementitious slurry. The set retarder, when employed, should be chosen in order to minimize the effect on the compressive strength of the slurry upon setting.

Suitable set retarders include glucoheptonates, such as sodium glucoheptonate, calcium glucoheptonate and magnesium glucoheptonate; lignin sulfonates, such as sodium lignosulfonate and calcium sodium lignosulfonate; gluconic acids gluconates, such as sodium gluconate, calcium gluconate and calcium sodium gluconate; phosphonates, such as the sodium salt of EDTA phosphonic acid; sugars, such as sucrose; hydroxycarboxylic acids, such as citric acid; and the like, as well as their blends.

When employed, the amount of set retarder employed is between from about 0.1 to about 2 weight percent of the cement mix.

The following examples illustrate the practice of the present invention in its preferred embodiments. Other embodiments within the scope of the claims herein will be apparent to one skilled in the art from consideration of the specification and practice of the invention as disclosed herein. It is intended that the specification, together with the examples, be considered exemplary only, with the scope and spirit of the invention being indicated by the claims which follow.

### EXAMPLES

### Examples 1-4.

Cement mixes were prepared by blending some or all of the following components: high early cement ("HE"), White Cliffs diatomaceous earth ("WCDE"), available from White Cliffs Mining in Arizona, metakaolin ("MK"), zeolite, 20 kg of sodium metasilicate, soda ash or sodium carbonate ("Ash"), 55 kg of sodium sulfate, sodium aluminate ("NaAl"). The zeolite was either a clinoptilolite zeolite ("CLP") or chabazite zeolite ("CHA").

A sufficient amount of fresh water was then added to the cement mix to reach a density of 1300 kg/m³. The resulting slurry was stirred for about 20 minutes to ensure homogeneity and dissolve any remaining lumps of dry material.

The rheology was then determined at 300, 200, 100 and 6 rpm on a rotational viscometer with an R1-B1 rotor-bob combination (API RP10B-2/ISO 10426-2).

The compressive strength of the slurries was measured by determining the amount of time required to achieve a compressive strength of 3.5 MPa (500 psi) at 30° C; the initial set being 0.35 MPa (50 psi). The compressive strength, in MPa, at 24 hours and 48 hours was also determined.

The results of the tests are set forth in Table I below:

**Table I**

| | | | | | | | | | | | | UCA Compressive Strength | | | |
|---|---|---|---|---|---|---|---|---|---|---|---|---|---|---|---|
| Ex. No. | HE kg | CLP kg | CHA kg | MK kg | WCDE kg | Ash kg | NaAl kg | Rheology | | | | 0.35 MPa hr:mn | 3.5 MPa hr:mn | 24 Hr. MPa | 48 Hr. MPa |
| | | | | | | | | 300 | 200 | 100 | 6 | | | | |
| 1 | 530 | | 100 | 190 | 90 | 10 | 5 | 50 | 45 | 37 | 21 | 5:10 | | 2.64 | 3.21 |
| 2 | 530 | | 50 | 230 | 100 | 10 | 5 | 58 | 51 | 45 | 25 | 6:10 | | 2.26 | 2.42 |
| 3 | 530 | | 150 | 80 | 150 | 10 | 5 | 51 | 45 | 38 | 23 | 5:32 | 46:24 | 2.39 | 3.49 |
| 4 | 525 | 100 | 100 | 200 | | | | 33 | 29 | 24 | 17 | 5:26 | | 2.6 | 3.4 |

From the foregoing, it will be observed that numerous variations and modifications may be effected without departing from the true spirit and scope of the novel concepts of the invention.

## Claims

1. A cement mix comprising:
(a) Portland cement or a mixture comprising at least two components selected from the group consisting of Portland cement, fly ash, slag, silica fume, gypsum, bentonite and limestone;
(b) diatomaceous earth;
(c) between from about 4 to about 20 weight percent zeolite;
(d) an alkali metasilicate and/or alkali silicate;
(e) an inorganic salt accelerator; and
(f) an aluminum silicate.

2. The cement mix of Claim 1, wherein the inorganic salt accelerator is sodium sulfate and further wherein the amount of alkali metasilicate and/or alkali silicate in the cement mix is from 0 to 5 weight percent.

3. The cement mix of Claim 1 or 2, wherein the Portland cement is selected from the group consisting of API Class A, C, G and H cements and Type I, II, III or V ASTM construction cements including high early cement.

4. The cement mix of any of Claims 1 to 3, wherein the alkali metasilicate and/or alkali silicate is selected from the group consisting of sodium metasilicate and sodium silicate preferably kaolin and metakaolin.

5. The cement mix of any of Claims 1 to 4, wherein the inorganic salt accelerator is selected from the group consisting of alkali sulfates, alkali aluminates, alkali carbonates, alkali chlorides, alkaline chlorides and preferably sodium sulfate, potassium sulfate, lithium sulfate, lithium chloride, sodium carbonate, sodium aluminate, potassium chloride, calcium chloride and sodium chloride.

6. The cement mix of any of Claims 1 to 5, further comprising at least one lightweight density modifying agent, preferably glass spheres, ceramic spheres, plastic spheres, perlite, gilsonite, coal, nitrogen gas or air.

7. A cementitious slurry comprising water and the cement mix of any of Claims 1 to 6.

8. The cementitious slurry of Claim 7, wherein the density of the cementitious slurry is less than or equal to 1500 kg/m³.

9. A method of blocking, plugging or back filling a pipeline, mine shaft, tunnel or excavation, the method comprising the steps of:
pumping the cementitious slurry of Claim 7 or 8 into the pipeline, mine shaft, tunnel or excavation; and
allowing the cementitious slurry to set.

10. A method of cementing within a subterranean formation for an oil well, gas well, water well, injection well, disposal well or storage well, the method comprising the steps of:
pumping the cementitious slurry of Claim 7 or 8 into the subterranean formation; and
allowing the cementitious slurry to set.
